# EUROPEAN PATENT SPECIFICATION

(11) **EP 0 323 444 B1**
(45) Date of publication and mention of the grant of the patent: **05.10.1994**
(21) Application number: 89103331.8
(22) Date of filing: 22.01.1986
(51) Int. Cl.: A01J 7/00, A01K 1/12

(54) **A device for milking animals, such as cows**
Gerät zum Melken von Tieren, wie z.B. Kühen
Dispositif de traite d'animaux, par exemple de vaches

(30) Priority: 28.01.1985 NL 8500224; 28.01.1985 NL 8500222; 28.01.1985 NL 8500223
(43) Date of publication of application: 05.07.1989
(62) Divisional of application: 86200099.9
(73) Proprietor: C. van der Lely N.V., NL-3155 PD Maasland (NL)
(72) Inventor: Van der Lely, Cornelis, CH-Zug (CH)
(74) Representative: Mulder, Herman

(56) References cited:
- EP-A- 0 091 892
- GB-A- 918 766
- GB-A- 2 007 486
- US-A- 2 952 860
- US-A- 4 010 714
- DE TELEGRAAF 04 December 1984, page T23 EEF BOS: "LAND- EN TUINBOUW"

## Description

The invention relates to a device for milking animals, such as cows, comprising a milking parlour and a milking machine with a milking cluster and cleaning means for the teats of the udder of the animal, the milking cluster and the cleaning means being integral parts of each other and having a common support. Generally, the milking parlour is a space where the animal can be positioned during milking and where the necessary hygiene must be observed.

Milking is effected by means of a milking machine having a milking cluster, whose teat cups can be attached to the teats of the udder. The supplied milk can be conveyed to a storage container. However, before milking takes place, the teats of the animal must be cleaned. In GB 918,766, which patent specification describes a device as indicated in the opening paragraph, the milking cluster and the cleaning means have a common support in the form of a harness, continuously carried by the animal.

The invention has for its object to provide a device for milking animals, such as cows, in which the successive cleaning and milking operatioon can be effected in a relatively simple, efficient and reliable manner, without the milking cluster and the cleaning means continuously being carried by the animal.

To that end, the device according to the invention is characterized in that the common support is rotatable around a substantially horizontal axis relative to a further support to direct the cleaning means or the milking cluster upwardly, for attachment to the udder. Thus, it is possible to control the milking cluster and also a further device for cleaning the udder, such as a washing basin, by means of the same support and the same positioning device.

In accordance with a further feature of the invention, the milking cluster and the cleaning means are located under the milking parlour floor, which floor is provided with at least one coverable opening through which the milking cluster and the cleaning means can perform telescopically up and down movement. Thus, the shortest distance between the relevant portions of the milking machine and the udder can be obtained, because these portions - the milking cluster and the cleaning means - can be applied to the animal in the upward direction.

Furthermore, according to the invention, the further support of the milking cluster and the cleaning means is capable of lateral movement and coupled to sensor means to determine te lateral position of the animal. In this situation, the sensor device can, according to the invention, be connected to the further support of the milking cluster and the cleaning means in such a manner that the milking cluster and the cleaning means can remain in a central position under the animal.

For a better understanding of the invention, an embodiment of a device for milking animals will now be described, by way of example, with reference to the drawing.
Figure 1 is a plan view of the device;
Figure 2 is a side elevational view of the device, partly in cross-section;
Figur 3 is a cross-sectional view along the line III-III of Figure 2;
Figure 4 shows a set-up of the device;
Figure 5 shows a number of details of the device, shown in plan view and
Figure 6 shows details by means of a cross-sectional view along the line VI-VI of Figure 5.

The Figures are shown schematically, corresponding components having been given the same reference numerals.

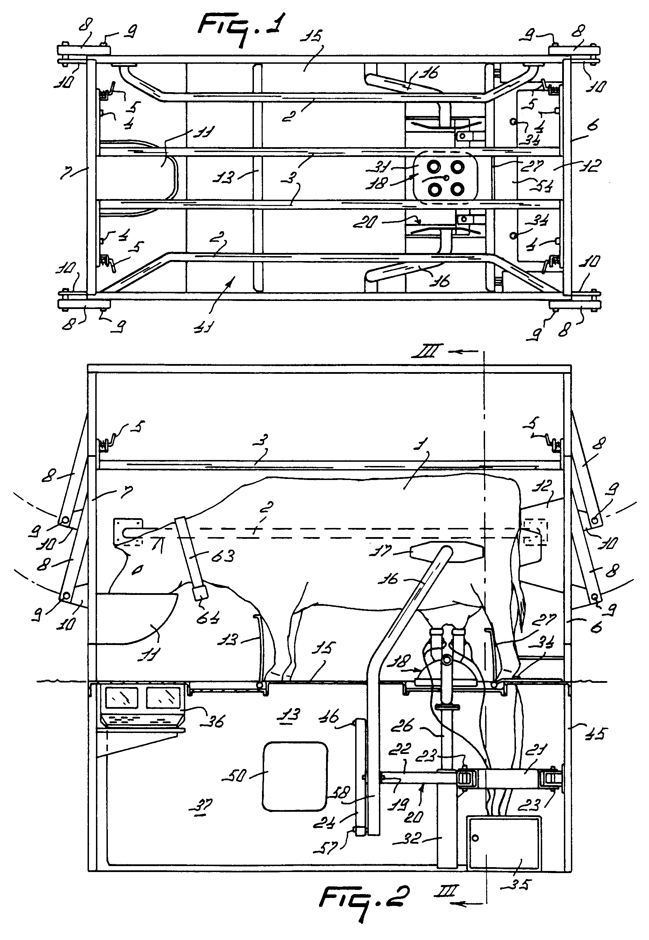

Figures 1, 2 and 3 show a milking parlour in which a cow 1 may be present. The milking parlour is provided on either side with guide rails 2 and with guide rails 3, which may extend over the cow. The lateral guide rails 2 are fastened to the milking parlour wall. The upper guide rails 3 are adjustable for height in that they can swivel around the hinge points 4 and can be locked in different positions by means of blocking devices.

In addition, the milking parlour has an entrance door 6 and an exit door 7. To open the doors, swivel arms 8 are provided which are connected capable of hinging to the frame or the wall of the device through hinge points 9 and also capable of swivelling to supports 10 fastened to the doors 6, 7. The doors 6 and 7 can be operated individually and automatically, for example hydraulically or pneumatically, through control means not further shown in the Figures 1, 2 and 3.

A manger 11 is fastened to the exit door 7, in which doses of fodder, for example concentrated fodder, can be applied through means not further shown.

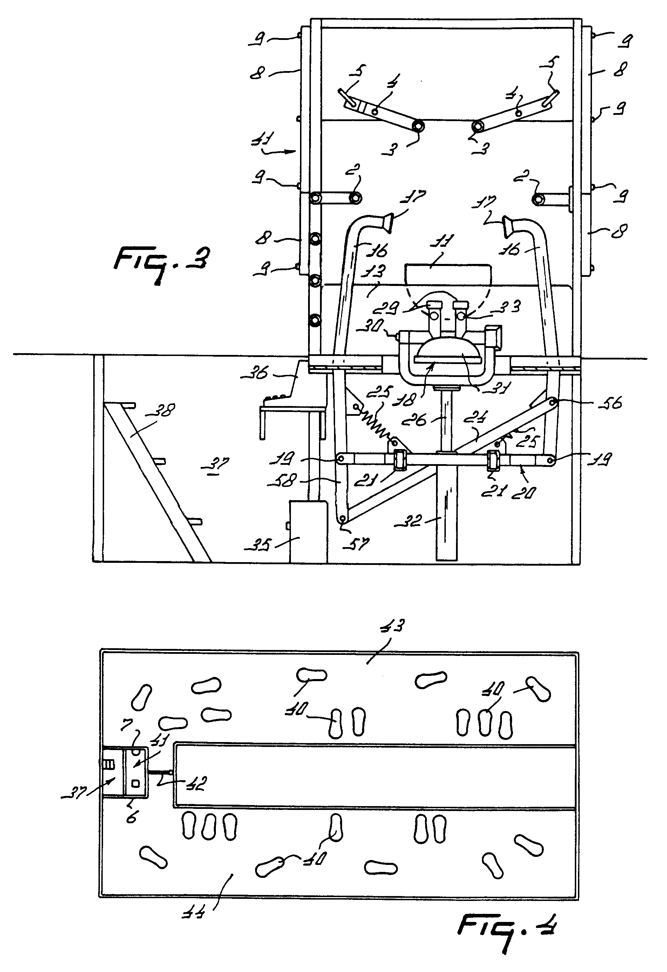

The entrance door 6 has a buffer 12, which - as is shown in Figure 2 - can bear against the posterior of the cow. Because of the presence of this buffer, the aminal cannot move to the rear or the possibility to move to the rear can be limited. In this way the aminal can be positioned in the longitudinal direction.

Figure 2 shows a flap 13, which is swivable around hinge pin 14 and is shown in its raised position. The flap 13 can be swivelled to a substantially horizontal position, the flap 13 then being flush with the floor 15 of the milking parlour. When the animal enters the milking parlour, flap 13 will be in the position shown, and the animal will move its forelegs up to or near the flap 13, so as to be able to reach the manger 11.

Additionally, the device has two sensor members 16, both provided with a shoe 17, which can bear against the animal's side. The mutual distance between the shoes 17 can be varied, but by means of a mechanism still further to be described in the sequel, the milking cluster 18 will always be in a central position below the two shoes 17. To that end, the two sensor members 16 are provided, each capable of hinging around a horizontal shaft 19, to a frame 20, which frame 20 can be moved laterally relative to the milking parlour because of the fact that it is supported by two parallel beams 21, each beam 21 being connected by means of one end and capable of hinging around a vertical shaft 22 to the frame 20 and by means of its other end, capable of hinging around vertical shaft 23 to the frame of the device. Thus a parallelogram structure is obtained. The mutual motion of the sensor members 16 is coupled such that their motion can only proceed symmetrically relative to the frame 20. For that purpose a connecting rod 24 is provided, one end 56 of which is connected capable of hinging to one sensor member, more specifically remote from hinge point 19, and by means of its other end 57 this rod 24 is connected to an extension 58 of the other sensor member at substantially the same distance from hinge point 19. So as to pull the two sensor members 16 slightly towards each other, a tension spring 25 is provided. The support 26 for the milking cluster is also connected to the frame 20, so that it can also be moved laterally by swivelling of the beams 21.

The tension spring 25 moves the shoes 17 of the sensor members 16 to each other in such a way that the mutual distance between the shoes 17 is less that the width of an animal entering the milking parlour. As a result thereof, the shoes will bear on both sides against the animal, the frame 20 always being moved to a position straight under the animal, as a result of which the milking cluster support 26 will always be central under the animal. Even if the animal moves during milking in a lateral direction, the milking cluster will follow this movement.

The device can also include means for moving the sensor members 16 mutually from each other when the animal enters and/or leaves the milking parlour.

The device furthermore includes a flap 27, which is swivable around a horizontal hinge pin 28, which extends substantially in the lateral direction relative to the milking parlour. The flap 27 will be in its horizontal position when it forms part of the floor 15 of the milking parlour, when the animal enters the milking parlour. Thereafter the flap 27 can be swivelled in the vertical direction, thus preventing the hindlegs of the animal, which are then up against or near the flap 27, from being capable of forward movement. When one or both hindlegs of the animal would originally stand on the flap, this leg or both hindlegs will be compelled to move to the rear, which improves the accessibility of the udder. Because of the presence of guide rails 3 above the animal, the animal is prevented from trying to step over the flaps 13 or 27.

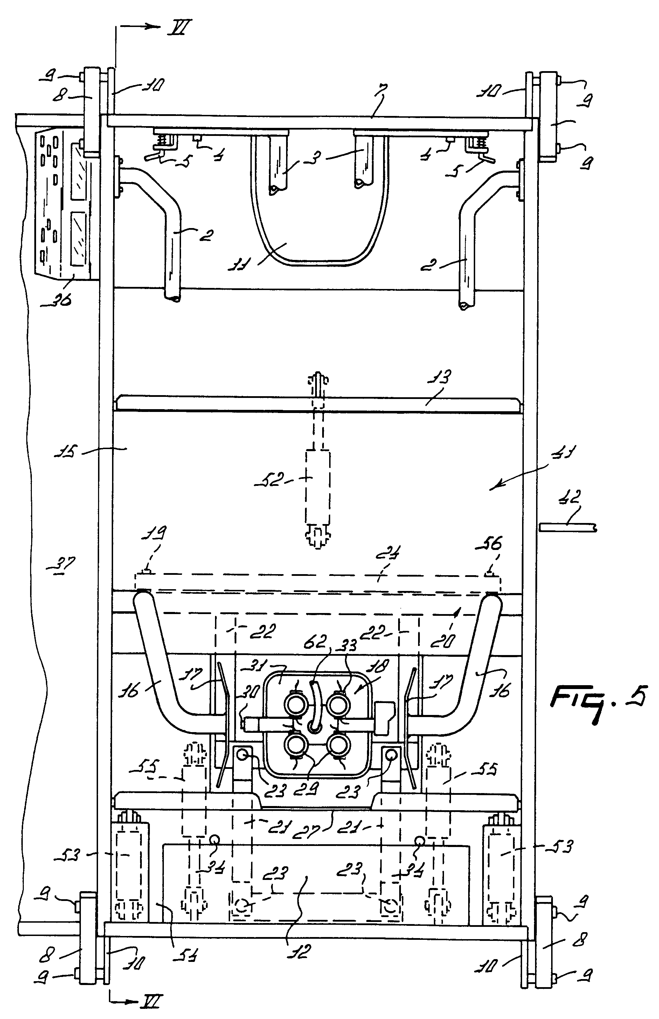

In Figure 1 four teat cups 29 of the milking cluster 18 are shown in plan view. As will be clear from the Figures 2 and 3, the teat cups 29 are connected such to the support 26 by means of the horizontal hinge pin 30 that the cup of the milking cluster can rotate through 180°, whereafter they face down, cleaning means, such as a bowl-shaped basin 31 also having been rotated through 180° so that this basin has its open side face upward. The bowl-shaped basin 31 may be used for washing and cleaning the udder.

The milking cluster 18 and the bowl-shaped basin 31 can move with their support 26 in the vertical direction, because the support 26 can move telescopically in the member 32 connected to the frame 20.

Figure 2 furthermore shows a number of sensors, more specifically sensors 33 on the teat cups 29, which sensors can detect whether the connection of the teat cup to the teat of the udder is effected correctly. Sensors 34 can detect whether the hindlegs of the animal are in a correct position.

In addition, a control unit denoted by reference numeral 35 and a microprocessor 36 are arranged below the milking parlour floor level.

As is shown in Figure 3, a control room 37 is also provided below the floor level of the milking parlour and a stair 38 is shown which gives access to the control room.

Figure 4 shows schematically a stable in which a number of animals 40 move freely. The milking parlour 41 is incorporated in the stable and furthermore a door 42 is present, so that the stable is divided into two portion 43 and 44. Door 42 is freely swivable in one direction, so that the animals 40 can move through this door from portion 44 to portion 43 of the stable, but not vice versa. The animals can only move from portion 43 to portion 44 of the stable through the milking parlour 41, which, for that purpose has an entrance door 6 and an exit door 7.

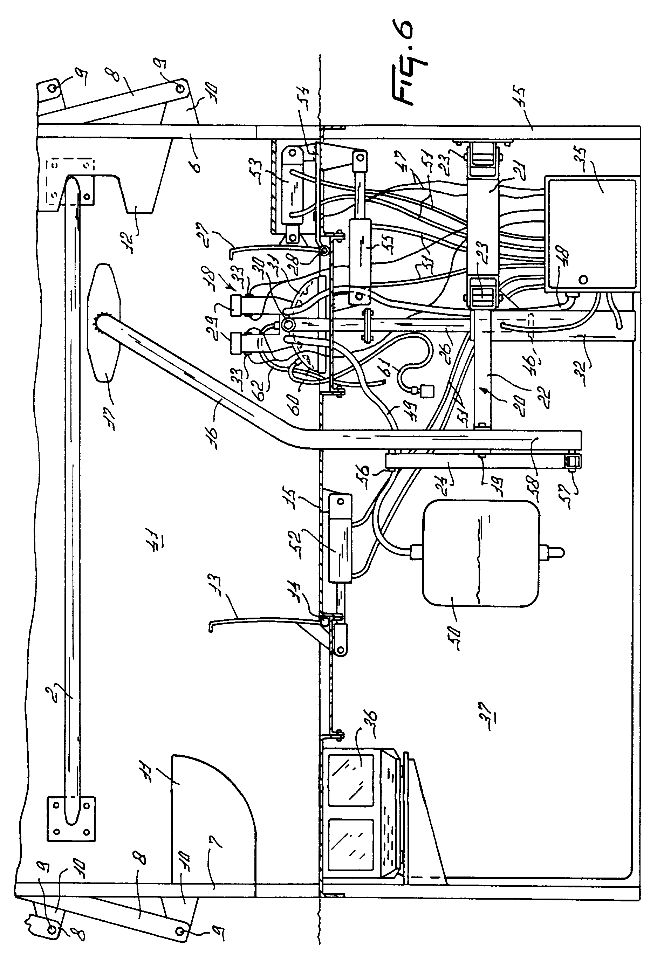

Figures 5 and 6 are cross-sectional views of a portion of the device for milking animals, which cross-sectional views show more details. The device includes guide rails 3 extending on both sides of the animal when the animal is in the milking parlour. In addition, in Figure 5 portions of guide rails 3 are shown, which guide rails may extend over the animal. The device furthermore has an entrance door 6 and an exit door 7, the entrance door 6 having a buffer 12 against which the posterior of the animal can bear, Door 7 is provided with a manger 11.

A frame 20 is connected in such a way to a wall 45 by means of bars 21 that the frame 22 is capable of moving substantially in the lateral direction. To that end, two bars 21 are provided which are mutually in parallel and are each connected by means of one end to the wall 45, capable of hinging around a vertical axis, and by means of their other ends through a vertical hinge pin to the frame 22, so that a parallelogram construction is obtained. The sensor members 16 are fastened to the frame 22 and the support 26 is fastened through member 32. Member 32 constitutes a cylinder in which a piston 46 connected to a support 26 can move with the object of moving the milking cluster 18 in the vertical direction.

Furthermore, the frame 22 supports two sensor members 16, which are both swivable, the connection being intercoupled by means of connecting rod 24. As has already been described in the foregoing, the sensor members 16 move the frame 22 such, that the milking cluster 18 is always in a central position under the two shoes 17 of sensor members 16. The milking cluster 18 which can move, by travelling in the vertical direction, to below the floor level of the milking parlour because a support 26 descends in element 32, has sensors 33 which can detect whether the teat cups 29 have been connected correctly to the teats of the udders. These sensors 33, as are also sensors 34 for detecting the position of the hindlegs of the animal, are connected by means of wires 47 to the control unit 35. By means of conduit 48, this control unit 35 is connected to the milking cluster 18, for producing the vacuum for the milking operation. The milk can flow to storage container 50 through conduit 49.

In addition, control unit 35 provides for the motions of the different portions of the device. To that end, control unit 35 is connected through hydraulic conduits or air conduits 51 to a hydraulic or pneumatic cylinder 52 for operating flap 13 and to a hydraulic or pneumatic cylinder 53 for operating flap 27. Also the height adjustment of support 26 of milking cluster 18 may be effected hydraulically or pneumatically.

Additionally, the device includes a floor portion 54 which is capable of sliding in the longitudinal direction relative to the milking parlour. By means of hinge 28 this floor portion 54 is connected to flap 27 and can be moved by means of a pneumatic or hydraulic cylinder 55. By moving the floor portion 54 rearwardly, the hindlegs of the animal can be moved to the rear, so that the udder is accessible to an improved degree. In this situation, the buffer 12 can bear against the posterior of the animal.

As is shown in Figure 6, the milking cluster 18 can swivel around horizontal shaft 30, so that the bowl-shaped basin 31 is directed upwardly. In this position of basin 31, cleaning of the animal's udder can be effected, for which purpose spray nozzles 60 and a liquid fed-forward through conduit 61 can be sprayed against the udder. This liquid may be a disinfectant, a rinsing agent in the form of warm water or any other liquid suitable for washing, rinsing, disinfecting or otherwise cleaning the udder. The bowl-shaped basin 31 has in its centre a discharge conduit 62 through which the used-up liquid can be discharged and through which optionally warm air can be blown to the udder for drying it.

Figures 5 and 6 show, also schematically, a micro-processor or computer 36 which can control the device. This control may relate to connecting the milking cluster to the udder, decoupling the milking cluster from the udder, rinsing, cleaning or disinfecting the udder, positioning of the animal, metering of fodder, etc. Then, the animal 1 may be provided with a collar 63 to which means 64 for identifying the animal are attached, so that using a sensor it can be detected which animal is present in the milking parlour, this information being used by the micro-processor 36 for controlling the device.

Further sensors may alternatively be provided, for example sensors for determining the temperature of the milk, which data may be important for controlling the device. The relevant data of each animal can be stored in the memory of the micro-processor 36 and are thus available in any combination for a person operating the device.

## Claims

1. A device for milking animals, such as cows, comprising a milking parlour and a milking machine with a milking cluster and cleaning means for the teats of the udder of the animal, the milking cluster (18) and the cleaning means (31) being integral parts of each other and having a common support, characterized in that the common support is rotatable around a substantially horizontal axis relative to a further support (26) to direct the cleaning means (31) or the milking cluster (18) upwardly, for attachment to the udder.

2. A device as claimed in claim 1, characterized in that the milking cluster (18) and the cleaning means (31) are located under the milking parlour floor, which floor is provided with at least one coverable opening through which the milking cluster and the cleaning means can perform telescopically up and down movement.

3. A device as claimed in claim 1 or 2, characterized in that the further support (26) of the milking cluster (18) and the cleaning means (31) is capable of lateral movement and coupled to sensor means (16) to determine the lateral position of the animal.

4. A device as claimed in claim 3, characterized in that the sensor means (16) is connected to the further support (26) of the milking cluster (18) and the cleaning means (31) in such a manner that the milking cluster (18) and the cleaning means (31) can remain in a central position under the animal.

## Patentansprüche

1. Vorrichtung zum Melken von Tieren, wie z. B. Kühen, mit einem Melkstand und einer Melkmaschine, die ein Melkgeschirr und eine Reinigungsvorrichtung für die Zitzen des Euters des Tieres aufweist, wobei das Melkgeschirr (18) und die Reinigungsvorrichtung (31) als integrale Einheit ausgebildet sind und einen gemeinsamen Halter haben,
dadurch gekennzeichnet, daß der gemeinsame Halter um eine im wesentlichen horizontale Achse relativ zu einem weiteren Halter (26) drehbar ist, um die Reinigungsvorrichtung (31) oder das Melkgeschirr (18) zum Anschluß an das Euter nach oben auszurichten.

2. Vorrichtung nach Anspruch 1,
dadurch gekennzeichnet, daß das Melkgeschirr (18) und die Reinigungsvorrichtung (31) unter dem Melkstandboden angeordnet sind, der mindestens eine abdeckbare Öffnung aufweist, durch welche hindurch das Melkgeschirr und die Reinigungsvorrichtung teleskopartig nach oben und unten zu bewegen sind.

3. Vorrichtung nach Anspruch 1 oder 2,
dadurch gekennzeichnet, daß der weitere Halter (26) des Melkgeschirres (18) und der Reinigungsvorrichtung (31) seitwärts zu verschieben und mit einem Sensor (16) zur Ermittlung der seitlichen Position des Tieres zu verbinden ist.

4. Vorrichtung nach Anspruch 3,
dadurch gekennzeichnet, daß der Sensor (16) mit dem weiteren Halter (26) des Melkgeschirres (18) und der Reinigungsvorrichtung (31) derart verbunden ist, daß das Melkgeschirr (18) und die Reinigungsvorrichtung (31) in einer mittigen Position unter dem Tier zu halten sind.

## Revendications

1. Dispositif pour traire des animaux, tels que des vaches, comprenant une stalle de traite et une machine à traire avec un groupe de trayeurs et des moyens pour nettoyer les trayons du pis de l'animal, le groupe de trayeurs (18) et les moyens de nettoyage (31) étant mutuellement des parties intégrales de l'un et l'autre, et ayant un support commun,
**caractérisé** en ce que le support commun est rotatif autour d'un axe sensiblement horizontal, par rapport à un autre support (26), pour diriger les moyens de nettoyage (31) ou le groupe de trayeurs (18) vers le haut, pour les attacher au pis de l'animal.

2. Dispositif selon la revendication 1, caractérisé en ce que le groupe de trayeurs (18) et les moyens de nettoyage (31) sont situés sous le plancher de la stalle de traite, lequel plancher est muni d'au moins une ouverture pouvant être couverte, à travers laquelle le groupe de trayeurs et les moyens de nettoyage peuvent exécuter, de manière télescopique, un mouvement vers le haut et vers le bas.

3. Dispositif selon la revendication 1 ou 2, caractérisé en ce que l'autre support (26) du groupe de trayeurs (18) et des moyens de nettoyage (31) est capable de mouvement latéral et est couplé à un moyen capteur (16) pour déterminer la position latérale de l'animal.

4. Dispositif selon la revendication 3, caractérisé en ce que le moyen capteur (16) est relié à l'autre support (26) du groupe de trayeurs (18) et des moyens de nettoyage (31) de telle manière que le groupe de trayeurs (18) et les moyens de nettoyage (31) peuvent rester en une position centrale sous l'animal.
